# EUROPEAN PATENT APPLICATION

(11) **EP 4 800 714 A1**
(43) Date of publication of application: **02.09.2026**
(21) Application number: 24882410.4
(22) Date of filing: 23.10.2024
(51) Int. Cl.: G21F 1/10, C09D 5/33, C09D 123/08, C09D 129/04, G21F 3/00

(54) **COATING COMPOSITION AND RADIATION SHIELDING COATING COMPOSITION**

(30) Priority: 25.10.2023 JP 2023183314
(71) Applicant: Mitsubishi Chemical Corporation, Tokyo 100-8251 (JP)
(72) Inventor: FUJITA Rie, Tokyo 100-8251 (JP); SAKAI Norihito, Tokyo 100-8251 (JP); KUWAGAKI Setsuka, Tokyo 100-8251 (JP); UEDA Kodai, Tokyo 100-8251 (JP)
(74) Representative: Hoffmann Eitle
(86) International application number: PCT/JP2024/037724
(87) International publication number: WO 2025/089299

(57) **Abstract**

The present invention relates to a coating composition containing: an emulsion (I) containing: a saponified ethylene-vinyl ester-based copolymer (A) with an ethylene-derived structural unit content of 10 mol% or more; and a poly(vinyl alcohol)-based resin (B) with an ethylene-derived structural unit content of less than 10 mol%, wherein a content ratio of the poly(vinyl alcohol)-based resin (B) per 100 mass% of a total of the saponified ethylene-vinyl ester-based copolymer (A) and the poly(vinyl alcohol)-based resin (B) is from 5 to 90 mass%, and a degree of saponification of the poly(vinyl alcohol)-based resin (B) is from 70 to 97 mol%.

## Description

### Technical Field

The present invention relates to a coating composition and a radiation shielding coating composition.

### Background Art

Saponified ethylene-vinyl ester-based copolymers have excellent oxygen gas barrier properties and thus have been used as gas barrier layers of various packaging films in the art (e.g., see Patent Literature 1).

In addition, saponified ethylene-vinyl ester-based copolymers have excellent solvent resistance, thus making it difficult to dissolve such a copolymer in a solvent to prepare a coating liquid (coating material) when the copolymer is formed into a laminate. Thus, such a copolymer is usually laminated by melt extrusion.

However, in the case of laminating with a material other than a thermoplastic resin or laminating on a material with a complicated shape, the coating material is required to have fluidity.

In addition, ethylene-based polymers with a high proportion of hydrogen atoms have been attracting attention as radiation shielding materials.

Radiation is broadly divided into electromagnetic radiation and particle radiation. The main electromagnetic radiation is gamma rays and X-rays; and the main particle radiation includes alpha rays (α rays = helium nuclei) and beta rays (β rays = electrons) produced from radioisotopes, and high-energy electrons, protons, neutrons, and heavy particles (heavy ions) produced in space environments, accelerator facilities, and the like.

Among these, electrically neutral neutrons are not shielded by a substance because they are not affected by electromagnetic interaction; thus, to protect a human body or the like from neutrons, a shielding material particularly corresponding to their properties is required.

Neutrons are produced by nuclear fission in a nuclear reactor and also continue to be produced from spent nuclear fuel by spontaneous fission and (α, n) reaction. In addition, neutrons are also produced by a high-energy particle nuclear reaction in a particle accelerator used for purposes, such as medical and research use, and by a photonuclear reaction (nuclear reaction between photons and nuclei) in a medical X-ray linac exceeding 20 million electron volts (20 MeV). Neutrons are related to various fields, such as energy and medicine, and are also utilized in industry for purposes, such as nondestructive testing, and in medical applications, such as cancer treatment.

High-energy neutrons penetrate deep into the human body and impart significant energy to the constituent elements of the human body. This increases a dose conversion coefficient, which represents the radiation risk to the human body, and significantly affects the external exposure of the human body. Neutrons from medical accelerators, nuclear reactors, spent nuclear fuel, or the like are mainly produced in the energy range called fast neutrons of approximately one million electron volts (MeV) in terms of kinetic energy. Thus, efficiently shielding the fast neutrons is highly effective in reducing external exposure to neutron beams. Moderation by elastic scattering between neutrons and hydrogen atoms, which have nearly the same mass as that of a neutron, is known to be effective in shielding the fast neutrons. Thus, high-hydrogencontent materials have been utilized as fast neutron shielding materials. For example, among resins, polyethylene, particularly high-density polyethylene, is known to have a relatively high proportion of hydrogen atoms and thus excellent neutron shielding performance.

For example, Patent Literature 2 describes a neutron absorbing material made of ultrahigh-density polyethylene in which a boron compound, preferably boron carbide (B₄C), is embedded.

In addition, Patent Literature 3 describes a neutron shielding structure including: an inner layer made of polyethylene containing a substance that absorbs neutrons; an intermediate layer made of polyethylene and disposed on the inner layer; and an outer layer made of polyethylene containing a substance that absorbs neutrons and disposed on the intermediate layer.

### Citation List

### Patent Literature

Patent Literature 1: JP 2022-139179 A
Patent Literature 2: JP H03-107797 A
Patent Literature 3: JP 2015-010826 A

### Summary of Invention

### Technical Problem

However, coating materials composed of a polyethylene emulsion and/or silicone, when containing an inorganic filler and/or the like with a high specific gravity and a tendency to settle, have been associated with problems of poor dispersion stability of the inorganic filler and/or the like and poor coating film formability.

To overcome these problems, one object of the present invention is to provide a coating composition having excellent coating film formability and excellent water resistance when a coating film is formed.

### Solution to Problem

As a result of diligent studies, the present inventors have found that a coating composition containing an emulsion containing a saponified ethylene-vinyl ester-based copolymer and a poly(vinyl alcohol)-based resin in a specific ratio has excellent coating film formability and excellent water resistance when a coating film is formed.

That is, the present invention relates to the following aspects 1 to 10.

Aspect 1 of the present invention is a coating composition containing:
an emulsion (I) containing:
a saponified ethylene-vinyl ester-based copolymer (A) with an ethylene-derived structural unit content of 10 mol% or more; and
a poly(vinyl alcohol)-based resin (B) with an ethylene-derived structural unit content of less than 10 mol%, in which
a content ratio of the poly(vinyl alcohol)-based resin (B) per 100 mass% of a total of the saponified ethylene-vinyl ester-based copolymer (A) and the poly(vinyl alcohol)-based resin (B) is from 5 to 90 mass%, and
a degree of saponification of the poly(vinyl alcohol)-based resin (B) is from 70 to 97 mol%.

Aspect 2 of the present invention is the coating composition according to aspect 1, in which an average particle size of emulsion particles in the emulsion (I) is from 0.1 to 20 µm.

Aspect 3 of the present invention is the coating composition according to aspect 1 or 2, in which a content of the ethylene-derived structural unit in the saponified ethylene-vinyl ester-based copolymer (A) is from 10 to 77 mol%.

Aspect 4 of the present invention is the coating composition according to any one of aspects 1 to 3, in which the degree of saponification of the poly(vinyl alcohol)-based resin (B) is from 85 to 95 mol%.

Aspect 5 of the present invention is the coating composition according to any one of aspects 1 to 4, in which an average degree of polymerization of the poly(vinyl alcohol)-based resin (B) is from 1800 to 2500.

Aspect 6 of the present invention is the coating composition according to any one of aspects 1 to 5, further containing an inorganic filler (C).

Aspect 7 of the present invention is the coating composition according to aspect 6, in which the inorganic filler (C) is contained in an amount from 100 to 2000 parts by mass per 100 parts by mass of the saponified ethylene-vinyl ester-based copolymer (A).

Aspect 8 of the present invention is the coating composition according to aspect 6 or 7, in which the inorganic filler (C) contains at least one selected from the group consisting of a calcium-based compound, a titanium-based compound, a vanadium-based compound, a chromium-based compound, a manganese-based compound, an iron-based compound, a cobalt-based compound, a nickel-based compound, a copper-based compound, a zinc-based compound, a zirconium-based compound, a niobium-based compound, a molybdenum-based compound, a technetium-based compound, a ruthenium-based compound, a rhodium-based compound, a palladium-based compound, a silver-based compound, a cadmium-based compound, an indium-based compound, a tin-based compound, an antimony-based compound, a barium-based compound, a lanthanum-based compound, a cerium-based compound, a neodymium-based compound, a samarium-based compound, a gadolinium-based compound, a lithium-based compound, a boron-based compound, a hafnium-based compound, a tantalum-based compound, a tungsten-based compound, a rhenium-based compound, an osmium-based compound, a platinum-based compound, a gold-based compound, a thallium-based compound, a lead-based compound, a bismuth-based compound, a polonium-based compound, sand, soil, clay, ore, a mineral, mortar, cement, concrete, asphalt, and ceramic.

Aspect 9 of the present invention is a radiation shielding coating composition containing the coating composition described in any one of aspects 1 to 8.

Aspect 10 of the present invention is the radiation shielding coating composition according to aspect 9, in which the radiation includes one or more selected from the group consisting of neutrons, protons, and heavy particles.

### Advantageous Effects of Invention

According to the present invention, provided is a coating composition having excellent coating film formability and excellent water resistance when a coating film is formed. In addition, the present inventors have also found that the coating composition exhibits a better neutron shielding ability even in comparison with coating compositions including a high-density polyethylene, which is believed to exhibit a high neutron shielding ability due to a high proportion of hydrogen atoms. Thus, according to the present invention, also provided is a radiation shielding coating composition containing the coating composition and having an excellent radiation shielding ability.

### Description of Embodiments

Hereinafter, the present invention will be described in detail. However, the present invention is not limited to the following embodiments and can be freely modified and carried out without departing from the gist of the present invention. In addition, "to" indicating a numerical range is used to mean that numerical values described before and after "to" are included as a lower limit value and an upper limit value, respectively.

### Coating Composition

The coating composition of the present embodiment contains:
an emulsion (I) containing:
a saponified ethylene-vinyl ester-based copolymer (A) with an ethylene-derived structural unit content of 10 mol% or more; and
a poly(vinyl alcohol)-based resin (B) with an ethylene-derived structural unit content of less than 10 mol%. Here, a content ratio of the poly(vinyl alcohol)-based resin (B) per 100 mass% of a total of the saponified ethylene-vinyl ester-based copolymer (A) and the poly(vinyl alcohol)-based resin (B) is from 5 to 90 mass%. In addition, the degree of saponification of the poly(vinyl alcohol)-based resin (B) is from 70 to 97 mol%. Hereinafter, each component will be described in order.

### Saponified Ethylene-Vinyl Ester-Based Copolymer (A)

The saponified ethylene-vinyl ester-based copolymer (hereinafter abbreviated as EVOH)(A) used in the present embodiment is usually a resin obtained by saponification of a copolymer of ethylene and a vinyl ester-based monomer (ethylene-vinyl ester-based copolymer). For example, the EVOH mainly contains an ethylene-derived structural unit and a vinyl alcohol structural unit, and further contains a vinyl ester structural unit that remains unsaponified.

The content of the ethylene-derived structural unit (ethylene content) in the EVOH (A), as a value measured based on ISO 14663, is 10 mol% or more, preferably from 10 to 77 mol%, more preferably from 20 to 60 mol%, and even more preferably from 23 to 50 mol%, from 25 to 48 mol%, and from 25 to 45 mol% in this order. That is, the ethylene content of the EVOH (A) is 10 mol% or more, preferably 20 mol% or more, more preferably 23 mol% or more, and particularly preferably 25 mol% or more. In addition, the ethylene content of the EVOH (A) is preferably 77 mol% or less, more preferably 60 mol% or less, even more preferably 50 mol% or less, and still more preferably 48 mol% or less and 45 mol% or less in this order. The ethylene content of the EVOH (A) of 10 mol% or more allows a coating film to appropriately exhibit water resistance and gas barrier properties. Furthermore, the ethylene content of the EVOH (A) of 77 mol% or less is preferred because it can improve crystallinity and adjust the arrangement of hydroxy groups to facilitate hydrogen bonding, improving radiation shielding properties. Moreover, the ethylene content of the EVOH (A) of 77 mol% or less is preferred also because it can increase the number of hydroxy groups in the material and thus increases the number of hydrogen bonds between the hydroxy groups, and can further improve the radiation shielding properties. The ethylene content of the EVOH (A) of 10 to 77 mol% is likely to allow the coating film to have even better water resistance and gas barrier properties when it is formed. Still more, this is also likely to allow the coating film to have excellent radiation shielding properties.

In addition to the ethylene-derived structural unit and the vinyl alcohol structural unit (including an unsaponified vinyl ester structural unit), the EVOH (A) may further contain a structural unit derived from various monomers as a monomer used in the copolymerization with the vinyl ester-based monomer. In addition, the EVOH (A) may be an EVOH having a functional group introduced by post-modification. Examples of the monomer used in the copolymerization include various monomers exemplified as the monomer used in the copolymerization with the vinyl ester-based monomer in the production of the poly(vinyl alcohol)-based resin (B) described later. In addition, for the post-modification, the same method as that for the post-modification of the poly(vinyl alcohol)-based resin (B) described later can be employed.

The degree of saponification of the EVOH (A) is usually from 90 to 100 mol%, preferably from 95 to 100 mol%, and particularly preferably from 99 to 100 mol%.

The degree of saponification not less than the above lower limit value can facilitate uniform mixing when an inorganic filler (C) described later is mixed in the resin composition. In addition, the relatively high degree of saponification can further improve the radiation shielding performance. The degree of saponification may be 100 mol%, but from the perspective of ease of industrial production, it may be not more than the above upper limit value.

The melt flow rate (MFR) (210°C, load 2160 g) of the EVOH (A) is usually from 0.5 to 100 g/10 min, preferably from 1 to 50 g/10 min, and particularly preferably from 3 to 35 g/10 min. That is, the MFR of the EVOH (A) may be 0.5 g/10 minutes or more, preferably 1 g/10 minutes or more, and particularly preferably 3 g/10 minutes or more. In addition, the MFR of the EVOH (A) may be 100 g/10 minutes or less, preferably 50 g/10 minutes or less, and particularly preferably 35 g/10 minutes or less. The MFR of the EVOH (A) not less than the above lower limit value can improve the molding processability in melt extrusion or the like. In addition, the MFR of the EVOH (A) not more than the above upper limit value can improve the strength of a molded article when mold-processed into a film, a sheet, or a molded article.

In the present embodiment, one EVOH (A) or a mixture of two or more EVOHs (A) may be used. Examples of using two or more EVOHs (A) include combination of two or more unmodified EVOHs with different degrees of saponification, viscosity average polymerization degrees, melting points, and/or the like; combination of an unmodified EVOH and a modified EVOH; and combination of two or more modified EVOHs with different degrees of saponification, viscosity average polymerization degrees, melting points, types of functional groups, modification rates, and/or the like.

The EVOH is a resin obtained by copolymerization of ethylene and a vinyl ester-based monomer followed by saponification, and is a water-insoluble thermoplastic resin known as an ethylene-vinyl alcohol-based copolymer or a saponified ethylene-vinyl acetate-based copolymer. Any known polymerization method can be used for the polymerization, for example, solution polymerization, suspension polymerization, or emulsion polymerization; however, solution polymerization with methanol as a solvent is usually used. The resulting ethylene-vinyl ester-based copolymer can also be saponified by a known method.

### Poly(Vinyl Alcohol)-Based Resin (B)

The poly(vinyl alcohol)-based resin (hereinafter abbreviated as PVA-based resin) (B) used in the present embodiment mainly has a vinyl alcohol structural unit, and has a vinyl ester structural unit of an unsaponified portion and, as necessary, a structural unit derived from another copolymerizable monomer.

In the present embodiment, the ethylene-derived structural unit content (ethylene content) of the PVA-based resin (B) is less than 10 mol%, preferably less than 5 mol%, more preferably less than 2 mol%, and particularly preferably 0 mol%. The PVA-based resin (B) with too high an ethylene content would be water-insoluble and not be able to exhibit good surface-active effect and protective colloidal properties, whereas the PVA-based resin (B) with a low ethylene content of less than 10 mol% exhibits good surface-active effect and protective colloidal properties, making it possible to form a uniform EVOH emulsion.

In addition to unmodified PVAs, examples of the PVA-based resin (B) include copolymerized modified PVAs obtained by copolymerization of various monomers during production of a polyvinyl ester-based resin, followed by saponification of the copolymer; and various post-modified PVAs obtained by introducing any of various functional groups into an unmodified PVA by post-modification. Such modification can be performed in a range without losing a sufficient degree of polymerization for forming a polymer of the PVA-based resin. Furthermore, the modified PVA may be optionally further post-modified.

In the case of obtaining a copolymerized modified PVA, examples of the monomer used in the copolymerization with the vinyl ester-based monomer in the production of the vinyl ester-based resin include olefins, such as ethylene, propylene, isobutylene, α-octene, α-dodecene, and α-octadecene; unsaturated acids, such as acrylic acid, methacrylic acid, crotonic acid, maleic acid, maleic anhydride, and itaconic acid, or their salts, their mono- or di-alkyl esters; nitriles, such as acrylonitrile and methacrylonitrile; amides, such as acrylamide and methacrylamide; olefin sulfonic acids, such as ethylenesulfonic acid, allylsulfonic acid, and methallylsulfonic acid, or their salts; alkyl vinyl ethers; N-acrylamide methyltrimethylammonium chloride; allyltrimethylammonium chloride; dimethylallyl vinyl ketone; N-vinylpyrrolidone; vinyl chloride; vinylidene chloride; poly(oxyalkylene) (meth)allyl ethers, such as poly(oxyethylene) (meth)allyl ether and poly(oxypropylene) (meth)allyl ether; poly(oxyalkylene) (meth)acrylates, such as poly(oxyethylene) (meth)acrylate and poly(oxypropylene) (meth)acrylate; poly(oxyalkylene) (meth)acrylamides, such as poly(oxyethylene) (meth)acrylamide and poly(oxypropylene) (meth)acrylamide; poly(oxyethylene) (1-(meth)acrylamide-1,1-dimethylpropyl) ester; poly(oxyalkylene) vinyl ether, such as poly(oxyethylene) vinyl ether and poly(oxypropylene) vinyl ether; poly(oxyalkylene) allylamine, such as poly(oxyethylene) allylamine and poly(oxypropylene) allylamine; poly(oxyalkylene) vinylamine, such as poly(oxyethylene) vinylamine and poly(oxypropylene) vinylamine; and hydroxy groupcontaining α-olefins, such as 3-buten-1-ol, 4-penten-1-ol, and 5-hexen-1-ol, or their derivatives, such as their acylated products. Here, "(meth)allyl" means allyl or methallyl, "(meth)acryl" means acryl or methacryl, and "(meth)acrylate" means acrylate or methacrylate.

In addition, examples of the monomer used in the copolymerization with the vinyl ester-based monomer include compounds having a diol, such as 3,4-dihydroxy-1-butene, 3,4-diacyloxy-1-butene, 3-acyloxy-4-hydroxy-1-butene, 4-acyloxy-3-hydroxy-1-butene, 3,4-diacyloxy-2-methyl-1-butene, 4,5-dihydroxy-1-pentene, 4,5-diacyloxy-1-pentene, 4,5-dihydroxy-3-methyl-1-pentene, 4,5-diacyloxy-3-methyl-1-pentene, 5,6-dihydroxy-1-hexene, 5,6-diacyloxy-1-hexene, glycerol monoallyl ether, 2,3-diacetoxy-1-allyloxypropane, 2-acetoxy-1-allyloxy-3-hydroxypropane, 3-acetoxy-1-allyloxy-2-hydroxypropane, glycerol monovinyl ether, glycerol monoisopropenyl ether, vinyl ethylene carbonate, and 2,2-dimethyl-4-vinyl-1,3-dioxolane.

From the perspective of radiation shielding properties, the content of an olefin, such as ethylene or propylene, among these monomers is preferably less than 10 mol%, more preferably 5 mol% or less, even more preferably 2 mol% or less, and particularly preferably 0 mol%.

In addition, examples of the post-modified PVA having a functional group introduced by post-modification include modified PVAs obtained by reaction with diketene and having an acetoacetyl group, modified PVAs obtained by reaction with ethylene oxide and having a poly(alkylene oxide) group, modified PVAs obtained by reaction with an epoxy compound or the like and having a hydroxyalkyl group, or modified PVAs obtained by reacting an aldehyde compound having any of various functional groups with a PVA-based resin.

A PVA-based resin containing a structural unit having a primary hydroxy group in a side chain may be used as the modified PVA-based resin. A PVA-based resin containing a structural unit having a primary hydroxy group in a side chain tends to have excellent melt moldability and is preferred. Examples of the PVA-based resin containing a structural unit having a primary hydroxy group in a side chain include modified PVA-based resins having a 1,2-diol structural unit in a side chain and modified PVA-based resins having a hydroxyalkyl group structural unit in a side chain, and a modified PVA-based resin having a 1,2-diol structural unit in a side chain is more preferred. The modified PVA-based resin containing a side-chain 1,2-diol structural unit can be produced by a known production method. For example, such a modified PVA-based resin can be produced by the method described in JP 2002-284818 A, JP 2004-285143 A, or JP 2006-095825 A.

Where the PVA-based resin (B) is a modified PVA-based resin, characteristics vary greatly depending on the types of functional groups, and thus the modification rate in the modified PVA-based resin, that is, the content of structural units derived from various monomers in the copolymer or a functional group introduced by post-modification, cannot be specified unconditionally; however, the modification rate may be, for example, from 0.1 to 20 mol%. However, as described above, the content of the ethylene-derived structural unit (ethylene content) in the PVA-based resin (B) is less than 10 mol%.

In the present embodiment, one PVA-based resin (B) or a mixture of two or more of them may be used. Examples of using two or more PVA-based resins (B) include combinations of two or more unmodified PVA-based resins with different degrees of saponification, viscosity average polymerization degrees, melting points, and/or the like; combinations of an unmodified PVA-based resin (B) and a modified PVA-based resin (B); and combinations of two or more modified PVA-based resins (B) with different degrees of saponification, viscosity average polymerization degrees, melting points, types of functional groups, modification rates, and/or the like.

The degree of saponification of the PVA-based resin (B) is from 70 to 97 mol%, preferably from 80 to 96 mol%, and even more preferably from 85 to 95 mol%.

The preferred range of the degree of saponification varies depending on the modification species; for example, the unmodified PVA-based resin has a degree of saponification of usually 87 mol% or more, and the upper limit is, for example, 90 mol% or less.

The degree of saponification within the above range enables the PVA-based resin (B) to exhibit good protective colloidal properties and surface activation ability and to form a uniform and stable EVOH emulsion. In addition, using the PVA-based resin (B) with the high degree of saponification makes it easier to obtain excellent gas barrier properties when the coating film is formed.

Furthermore, the viscosity of the 4 mass% aqueous solution of the PVA-based resin at 20°C is preferably from 5 to 70 mPa·s, more preferably from 15 to 60 mPa·s, and even more preferably from 20 to 50 mPa·s. When the viscosity is too low, the stability of the emulsion composition would tend to decrease.

In the case of using the unmodified PVA resin as the PVA-based resin, the viscosity of the 4 mass% aqueous solution of the unmodified PVA resin at 20°C is preferably from 5 to 70 mPa·s, more preferably from 15 to 60 mPa·s, and even more preferably from 30 to 50 mPa·s. When the viscosity is too low, the stability of the emulsion composition would tend to decrease.

In addition, in the case of using the modified PVA-based resin as the PVA-based resin, the viscosity of the 4 mass% aqueous solution of the modified PVA-based resin at 20°C is preferably from 5 to 50 mPa·s, more preferably from 13 to 40 mPa·s, and even more preferably from 17 to 30 mPa·s. When the viscosity is too low, the stability of the emulsion composition would tend to decrease.

The viscosity of the 4 mass% aqueous solution is measured in accordance with JIS K 6726 3.11.2.

The average degree of polymerization (measured in accordance with JIS K 6726) of the PVA-based resin (B) used in the present embodiment is usually from 250 to 3000, preferably from 800 to 3000, particularly preferably from 1200 to 2800, and even more preferably from 1800 to 2500. That is, the average degree of polymerization of the PVA-based resin (B) may be, for example, 250 or more and is preferably 800 or more, more preferably 1200 or more, and particularly preferably 1800 or more. In addition, the average degree of polymerization of the PVA-based resin (B) may be 3000 or less and is preferably 2800 or less, and particularly preferably 2500 or less. The average degree of polymerization within the above range enables the PVA-based resin (B) to exhibit good protective colloidal properties in the EVOH emulsion and to exhibit uniform dispersion stability of the emulsion particles.

Examples of the method for producing the PVA-based resin (B) used in the present embodiment include a method of polymerizing a vinyl ester-based monomer, such as vinyl acetate, and saponifying the resulting polymer to produce the PVA-based resin (B). In the case of obtaining a copolymerization-modified PVA, for example, a monomer composition containing a vinyl ester-based monomer and a monomer used for copolymerization is polymerized followed by saponification.

Examples of the vinyl ester-based monomer that can be used include vinyl propionate, vinyl butyrate, vinyl caproate, vinyl caprylate, vinyl caprate, vinyl laurate, vinyl myristate, vinyl palmitate, vinyl stearate, vinyl cyclohexanecarboxylate, vinyl pivalate, vinyl octylate, vinyl monochloroacetate, vinyl adipate, vinyl methacrylate, vinyl crotonate, vinyl sorbate, vinyl benzoate, vinyl cinnamate, and vinyl trifluoroacetate. From the perspectives of the price and ease of availability, vinyl acetate is preferably used as the vinyl ester-based monomer.

The vinyl ester-based monomer can be polymerized by any known polymerization method, for example, solution polymerization, suspension polymerization, or emulsion polymerization. Among these, solution polymerization, which can efficiently remove reaction heat, is preferably carried out under reflux. For example, an alcohol is used as a solvent for the solution polymerization; a lower alcohol having 1 to 3 carbons is preferably used.

Also, for the saponification of the resulting polymer, a known saponification method can be employed. That is, for example, the polymer can be saponified using an alkali or acid catalyst in a state where the polymer is dissolved in an alcohol or a water/alcohol solvent.

As the alkali catalyst, for example, a hydroxide or alcoholate of an alkali metal, such as potassium hydroxide, sodium hydroxide, sodium methylate, sodium ethylate, potassium methylate, or lithium methylate, can be used.

For example, a transesterification reaction using an alkali catalyst in an anhydrous alcohol-based solvent is preferably used in terms of the reaction rate and the ability to reduce impurities, such as fatty acid salts.

The reaction temperature of the saponification reaction is, for example, from 20 to 60°C. An excessively low reaction temperature would tend to reduce the reaction rate, resulting in lower reaction efficiency, whereas an excessively high reaction temperature may be equal to or higher than the boiling point of the reaction solvent, tending to reduce the safety in the production. Saponification under high pressure using a pressure-resistant continuous saponification column or the like enables saponification at a higher temperature, for example, from 80 to 150°C, making it possible to obtain a product with a high degree of saponification in a short time even with a small amount of saponification catalyst.

### Emulsion (I)

The emulsion (I) used in the present embodiment contains the EVOH (A) and the PVA-based resin (B), and further contains a dispersion medium. Usually, the EVOH (A) is a dispersoid, the PVA-based resin (B) is a dispersant, and particles of the EVOH (A) in the dispersion medium are dispersed and stabilized by the PVA-based resin (B).

The content ratio of the PVA-based resin (B) in the emulsion (I) used in the present embodiment is from 5 to 90 mass%, preferably from 7 to 80 mass%, and more preferably from 9 to 65 mass% per 100 mass% of a total of the EVOH (A) and the PVA-based resin (B).

The content ratio of the PVA-based resin (B) of 5 mass% or more per 100 mass% of a total of the EVOH (A) and the PVA-based resin (B) provides excellent dispersion stability when an inorganic filler and/or the like is contained and/or dispersed in the emulsion (I). In addition, this provides excellent coating film formability.

Furthermore, the content ratio of the PVA-based resin (B) of 90 mass% or less per 100 mass% of a total of the EVOH (A) and the PVA-based resin (B) provides excellent water resistance and gas barrier properties when the coating film is formed.

Moreover, the content of the EVOH (A) is usually from 5 to 25 mass%, preferably from 6 to 20 mass%, and particularly preferably from 8 to 18 mass% of the entire emulsion (I).

The dispersion medium is not particularly limited as long as it is a water-soluble component in a substance and concentration range that does not affect the stability of the emulsion composition, and any aqueous solution containing the water-soluble component is acceptable. Examples include water alone, an aqueous polysaccharide solution, and an aqueous cellulose (CNF) solution; and a water-soluble organic solvent in a small amount may be used in combination. Examples of the organic solvent include methanol, ethanol, and acetone. Among these, water is preferred from the perspectives of safety and supply.

The content of the dispersion medium is not particularly limited but is preferably 25 mass% or more, more preferably 35 mass% or more, and even more preferably 40 mass% or more relative to the total amount of the emulsion (I). In addition, the content is preferably 95 mass% or less, more preferably 85 mass% or less, and even more preferably 75 mass% or less.

In addition, in the case of using water and an organic solvent in combination as the dispersion medium, the content ratio of water relative to the total amount of the dispersion medium is preferably 60 mass% or more, more preferably 70 mass% or more, and even more preferably 90 mass% or more. Among these, using only water as the dispersion medium is most preferred.

The average particle size of the emulsion particles (dispersoid) in the emulsion (I) used in the present embodiment is preferably from 0.1 to 20 µm, more preferably from 1 to 10 µm, and even more preferably from 2 to 5 µm. The average particle size within the above range provides better dispersion stability of the emulsion particles (dispersoid) in the emulsion (I). The average particle size is a median diameter of the emulsion particles (dispersoid) measured in accordance with JIS Z 8825.

Examples of the method for producing the emulsion (I) usually include (i) a highpressure homogenizer method and (ii) an extrusion forced mechanical emulsification method; (ii) the extrusion forced mechanical emulsification method allows continuous implementation of the melting process of the resin and thus is preferred in terms of production efficiency.
(ii) The extrusion forced mechanical emulsification method is an emulsification method of melt-kneading (at a kneading temperature of, for example, from 95 to 220°C) the EVOH (A), the PVA-based resin (B), and any other component in the emulsion using a twin-screw extruder, and charging a dispersion medium from an extruder vent. In addition, an aqueous solution of the PVA-based resin (B), which is the dispersant, may be prepared and added from the vent. The temperature of the vent portion from which the dispersion medium and the aqueous solution of the PVA-based resin (B) are added is preferably adjusted to 100°C or lower to reduce evaporation.

In addition, the coating composition may contain a component other than the emulsion (I); examples include an inorganic filler (C), an organic filler, and various additives. Examples of the various additives include leveling agents, defoamers, anti-settling agents, lubricants, abrasives, rust inhibitors, antistatic agents, light stabilizers, ultraviolet absorbers, polymerization inhibitors, stabilizers (thickeners), surfactants, colorants, plasticizers, and slip agents. Among these, the inorganic filler (C) is preferably contained in terms of easy application to various uses.

### Inorganic Filler (C)

Examples of the inorganic filler (C) usually include calcium-based compounds, titanium-based compounds, vanadium-based compounds, chromium-based compounds, manganese-based compounds, iron-based compounds, cobalt-based compounds, nickel-based compounds, copper-based compounds, zinc-based compounds, zirconium-based compounds, niobium-based compounds, molybdenum-based compounds, technetium-based compounds, ruthenium-based compounds, rhodium-based compounds, palladium-based compounds, silver-based compounds, cadmium-based compounds, indium-based compounds, tin-based compounds, antimony-based compounds, barium-based compounds, lanthanum-based compounds, cerium-based compounds, neodymium-based compounds, samarium-based compounds, gadolinium-based compounds, lithium-based compounds, boron-based compounds, hafnium-based compounds, tantalum-based compounds, tungsten-based compounds, rhenium-based compounds, osmium-based compounds, platinum-based compounds, gold-based compounds, thallium-based compounds, lead-based compounds, bismuth-based compounds, polonium-based compounds, sand, soil, clay, ore, minerals, mortar, cement, concrete, asphalt, and ceramic.

In the case of using the coating composition of the present embodiment as a radiation shielding coating composition described later, from the perspective of further enhancing the radiation shielding performance, such as the neutron shielding performance, the inorganic filler (C) preferably contains a compound containing one or more elements selected from the group consisting of Gd, B, and Li. The compound is not particularly limited; examples include oxides, composite oxides, sulfides, and hydroxides containing each element. These elements all have a large absorption cross-sectional areas for neutrons. Among these elements, Gd and B have larger absorption cross-sectional areas, and thus the inorganic filler (C) more preferably contains a compound containing at least one of Gd or B. Among these elements, Gd has the largest absorption cross-sectional area, and thus the inorganic filler most preferably contains a compound containing Gd. In addition, in another embodiment, from the perspectives of stability and toxicity, the inorganic filler preferably contains at least one selected from the group consisting of Gd₂O₃, B₂O₃, B₄C, and LiF.

Examples of the compound containing Gd include oxides, composite oxides, sulfides, and hydroxides each containing Gd. More specifically, examples include gadolinium oxide Gd₂O₃, gadolinium gallium garnet Gd₃Ga₅O₁₂, gadolinium ferrite GdFeO₃, Gd₃Fe₅O₁₂, gadolinium hydroxide Gd(OH)₃, cerium-activated gadolinium silicate Gd₂SiO₅:Ce, europium-activated gadolinium borate GdBO₃:Eu, europium-activated gadolinium oxide Gd₂O₃:Eu, europium-activated gadolinium oxysulfide Gd₂O₂S:Eu, europium-activated gadolinium aluminate Gd₃Al₅O₁₂:Eu, europium-activated gadolinium gallate Gd₃Ga₅O₁₂:Eu, europium-activated gadolinium vanadate GdVO₄:Eu, cerium- or chromium-activated gadolinium gallate Gd₃Ga₅O₁₂:Ce, Cr, terbium-activated gadolinium oxide Gd₂O₃:Tb, terbium-activated gadolinium oxysulfide Gd₂O₂S:Tb, praseodymium-activated gadolinium oxysulfide Gd₂O₂S:Pr, terbium-activated gadolinium gallate Gd₃Ga₅O₁₂:Tb, and terbium-activated gadolinium aluminate Gd₃Al₅O₁₂:Tb. From the perspective of excellent stability in the atmosphere, a Gd oxide is preferred, and Gd₂O₃ is more preferred.

Examples of the compound containing B include oxides, composite oxides, sulfides, hydroxides, carbides, nitrides, and phosphides each containing B, and more specifically, examples include boron carbide B₄C, boron nitride BN, boron phosphide BP, boron sulfide B₂S₃, boron phosphate BPO₄, and boron oxide B₂O₃. From the perspective of excellent stability in the atmosphere, B₄C or B₂O₃ is preferred.

Examples of the compound containing Li include oxides, composite oxides, sulfides, and hydroxides each containing Li, such as lithium fluoride LiF, lithium oxide Li₂O, lithium peroxide Li₂O₂, lithium aluminate LiAlO₂, lithium metaborate LiBO₂, lithium tetraborate Li₂B₄O₇, lithium germanate Li₂GeO₃, lithium molybdate Li₂MoO₄, lithium niobate LiNbO₃, lithium metasilicate Li₂SiO₃, lithium tantalate LiTaO₃, lithium titanate Li₂TiO₃, lithium vanadate LiVO₃, lithium tungstate LiWO₄, lithium zirconate Li₂ZrO₃, lithium nitride Li₃N, lithium hydroxide LiOH•H₂O, and methoxylithium LiOCH₃. From the perspective of excellent stability in the atmosphere, LiF or Li₂O is preferred.

In the case of using the coating composition of the present embodiment as a radiation shielding coating composition described later, in addition to the compound containing an element having absorption performance for neutrons, protons, and heavy particles, a compound containing an element having absorption performance for any of various radiations other than neutrons, protons, and heavy particles, a known additive, and/or the like may be contained as the inorganic filler (C) according to desired performance. Specific examples of the compound containing an element having absorption performance for any of various radiations other than neutrons, protons, and heavy particles include compounds containing one or more elements selected from the group consisting of lead, iron, Bi, Y, Zr, Nb, Mo, Hf, Ta, W, and lanthanoid elements. In addition, examples of compounds containing any of these elements include composite oxides, sulfides, and hydroxides. Among these, ZrO₂ is particularly preferred from the perspectives of being able to simultaneously absorb γ-rays produced by nuclear reaction and easy handling.

The proportion of the compound containing one or more elements selected from the group consisting of Gd, B, and Li in the inorganic filler (C) may be 0 mass% according to desired performance, but from the perspective of improving the shielding performance against neutrons and protons, the proportion is preferably 20 mass% or more, more preferably 30 mass% or more, even more preferably 40 mass% or more, still more preferably 50 mass% or more, particularly preferably 60 mass% or more, and may be 100 mass%.

The content of the inorganic filler (C) in the coating composition of the present embodiment is, for example, preferably from 100 to 2000 parts by mass per 100 parts by mass of the saponified ethylene-vinyl ester-based copolymer (A). That is, from the perspective of coatability, the content of the inorganic filler (C) in the coating composition is preferably 100 parts by mass or more, more preferably 150 parts by mass or more, and even more preferably 200 parts by mass or more per 100 parts by mass of the saponified ethylene-vinyl ester-based copolymer (A). In addition, from the perspective of coatability, the content of the inorganic filler (C) in the coating composition is preferably 2000 parts by mass or less, more preferably 1800 parts by mass or less, and even more preferably 1600 parts by mass or less per 100 parts by mass of the saponified ethylene-vinyl ester-based copolymer (A).

Furthermore, the content of the inorganic filler (C) in the case of using the coating composition of the present embodiment as a radiation shielding coating composition is, for example, preferably from 100 to 2000 parts by mass per 100 parts by mass of the saponified ethylene-vinyl ester-based copolymer (A). That is, from the perspective of improving the radiation shielding properties, the content of the inorganic filler (C) in the radiation shielding coating composition is preferably 100 parts by mass or more, more preferably 150 parts by mass or more, and particularly preferably 200 parts by mass or more per 100 parts by mass of the saponified ethylene-vinyl ester-based copolymer (A). Moreover, from the perspectives of the strength and shape stability of various molded articles, and molding processability, the content of the inorganic filler (C) in the radiation shielding coating composition is preferably 2000 parts by mass or less, more preferably 1800 parts by mass or less, even more preferably 1600 parts by mass or less, and particularly preferably 1400 parts by mass or less per 100 parts by mass of the saponified ethylene-vinyl ester-based copolymer (A).

The form and the like of the inorganic filler (C) are not particularly limited, but usually a powdery inorganic filler is suitably used. The average particle size of the inorganic filler (C) is, for example, preferably from 1 to 50 µm, more preferably from 2 to 30 µm, even more preferably from 2 to 20 µm. That is, the average particle size of the inorganic filler (C) is preferably 1 µm or more and more preferably 2 µm or more. In addition, the average particle size of the inorganic filler (C) is preferably 50 µm or less, more preferably 30 µm or less, and even more preferably 20 µm or less. The average particle size not more than the upper limit value enables precise designing of the particle arrangement in the coating film. Thus, the coating composition with such an average particle size can improve the radiation shielding properties when used as a radiation shielding coating composition. The average particle size not less than the above lower limit value enables the inorganic filler (C) to be uniformly dispersed in the coating film or a molded article. Here, the average particle size refers to the median diameter (d50) measured with a laser diffraction-type particle size analyzer in accordance with JIS Z 8825: Particle Size Analysis-Laser Diffraction-Scattering Method.

In addition, for the coating composition of the present embodiment containing the inorganic filler (C), the components can be mixed by a known method, such as a method of mixing the components, such as the EVOH (A), by melt-kneading, or a method of mixing the emulsion (I) containing the EVOH (A) and the PVA-based resin (B) with an aqueous or solventbased dispersion of the inorganic filler (C). The method of mixing the emulsion (I) with the inorganic filler (C) is preferred because the resulting coating composition is easy to handle.

The coating composition of the present embodiment contains the emulsion (I), and forms a coating film by being applied to a molded product (substrate).

The molded product on which a coating film is formed with the coating composition of the present embodiment is not particularly limited; examples include various molded products containing a metal material, such as iron, aluminum, brass, copper, tin plate, a stainless steel, a galvanized steel, and a zinc alloy (such as Zn-Al, Zn-Ni, or Zn-Fe) plated steel; a resin, such as a poly(butylene terephthalate) (PBT)/poly(ethylene terephthalate) (PET) alloy resin, an acrylonitrile butadiene styrene (ABS) resin, an acrylonitrile ethylene propylene diene styrene (AES) resin, a polycarbonate (PC) resin, a high heat PC resin, an acrylic resin, or a polystyrene resin; or a poorly adhesive substrate, such as a polyolefin resin (such as polypropylene or polyethylene) or a polyester resin (such as a PET resin or a PBT resin). In addition, the molded product may be composed of paper, mortar, concrete, wood, a ceramic-based material, or the like.

To form a coating film on these molded products using the coating composition of the present embodiment, the coating composition of the present embodiment is applied to the surface of the molded product (substrate) and dried.

The thickness of the coating film is preferably in the range of 20 to 1000 µm in terms of the thickness of the coating film after curing.

Examples of the method used for applying the coating composition include methods such as brush coating, spray coating, dip coating, spin coating, and flow coating.

In addition, the coating composition may be heated by a known heating means when dried. Examples of the heating means that can be used include drying furnaces, such as a hot-air furnace, an electric furnace, and an infrared induction heating furnace. The heating temperature is not particularly limited but is preferably approximately from 60 to 210°C. The heating time is not particularly limited but is preferably approximately from 5 to 20 minutes.

After the application of the coating composition and before heating, to prevent the occurrence of coating film defects, preheating, air blowing, or the like may be performed under heating conditions that do not substantially cure the coating film.

The temperature of the preheating is preferably approximately from 30 to 100°C. The time of the preheating is preferably approximately from 30 seconds to 15 minutes.

The air blowing can usually be performed by blowing air heated to a temperature of approximately 30 to 100°C to the coated surface for approximately 30 seconds to 15 minutes.

After the coating film is formed, it can be cured (stored) to further increase its hardness. The curing conditions may be, for example, at 0 to 60°C for approximately 1 to 10 days.

The coating composition of the present embodiment can be suitably used in a wide range of fields including coating on various vehicles, such as automobiles, buses, and railway vehicles; construction machines; agricultural machines; electrical equipment; precision electronic equipment; medical equipment; and floors, walls, and roofs of buildings, and their constituent materials, such as metal products, mortar and concrete products, woodworking products, plastic products, and ceramic-based building materials (such as calcium silicate plates and gypsum boards) as application objects. Among others, the coating composition is preferably used as a radiation shielding coating composition.

### Radiation Shielding Coating Composition

The radiation shielding coating composition according to the present embodiment contains the coating composition described above.

As a result of diligent studies, the present inventors have found that a poly(vinyl alcohol)-based resin (PVA-based resin) has particularly excellent neutron shielding performance and is suitable as a radiation shielding composition. In particular, the present inventors have found that a poly(vinyl alcohol)-based resin (PVA-based resin) has a lower hydrogen proportion (weight proportion of hydrogen atoms in the molecule) than polyethylene but has even better neutron shielding performance than polyethylene. The reason for this is presumed to be that the hydroxy group contained in the poly(vinyl alcohol)-based resin (PVA-based resin) forms a hydrogen bond, and this in turn increases the density of the resin and the hydrogen density (intermolecular cohesive force) in the resin. The poly(vinyl alcohol)-based resin (PVA-based resin) as used herein includes EVOH.

The radiation shielding composition according to the present embodiment contains the emulsion (I) containing the EVOH (A) and the PVA-based resin (B) and thus has excellent radiation shielding performance. Examples of the radiation to be targeted include neutrons, protons, gamma rays, X-rays, α-rays, β-rays, electrons, and heavy particles. The radiation to be targeted preferably includes one or more selected from the group consisting of neutrons, protons, and heavy particles. Protons and heavy particles are radiations that are effectively moderated by collisions with nuclei when shielded in a similar manner to neutrons. Thus, the radiation shielding coating composition according to the present embodiment is considered to have particularly excellent shielding performance against neutrons among radiations as well as excellent shielding performance against protons and heavy particles. In other words, the radiation shielding coating composition according to the present embodiment has particularly excellent performance of shielding radiation by moderating the radiation by collision with nuclei.

The radiation shielding coating composition of the present embodiment is composed of the coating composition described above, and the content of each component and any other component may be the same as those in the coating composition described above. In addition, the radiation shielding coating composition of the present embodiment preferably contains an inorganic filler (C) containing a compound containing one or more elements selected from the group consisting of Gd, B, and Li to further enhance the radiation shielding.

### Applications

The radiation shielding coating composition according to the present embodiment has excellent radiation shielding performance, particularly excellent neutron shielding performance, and thus is suitably used for protecting humans, articles including robots, and the like that may be exposed to radiation. More specifically, the radiation shielding coating composition according to the present embodiment is suitably used for nuclear power generation-related applications, such as nuclear reactors or peripheral members of nuclear reactors, and vessels and containers for storing nuclear waste and nuclear fuel debris; aerospace applications, such as members of aircraft and spacecraft, artificial satellites, and infrastructures related to the Moon and Mars; and medical applications, such as members used for medical accelerators and peripheral members of medical devices utilizing radiation.

In addition, the present specification also discloses the following aspects.
(i) Use of a coating composition for shielding radiation, the coating composition containing:
   an emulsion (I) containing:
   a saponified ethylene-vinyl ester-based copolymer (A) with an ethylene-derived structural unit content of 10 mol% or more; and
   a poly(vinyl alcohol)-based resin (B) with an ethylene-derived structural unit content of less than 10 mol%, in which
   a content ratio of the poly(vinyl alcohol)-based resin (B) per 100 mass% of a total of the saponified ethylene-vinyl ester-based copolymer (A) and the poly(vinyl alcohol)-based resin (B) is from 5 to 90 mass%, and
   a degree of saponification of the poly(vinyl alcohol)-based resin (B) is from 70 to 97 mol%.
(ii) A method for shielding radiation, the method including forming a coating film composed of a coating composition on a substrate, the coating composition containing:
   an emulsion (I) containing:
   a saponified ethylene-vinyl ester-based copolymer (A) with an ethylene-derived structural unit content of 10 mol% or more; and
   a poly(vinyl alcohol)-based resin (B) with an ethylene-derived structural unit content of less than 10 mol%, in which
   a content ratio of the poly(vinyl alcohol)-based resin (B) per 100 mass% of a total of the saponified ethylene-vinyl ester-based copolymer (A) and the poly(vinyl alcohol)-based resin (B) is from 5 to 90 mass%, and
   a degree of saponification of the poly(vinyl alcohol)-based resin (B) is from 70 to 97 mol%.

### Examples

Hereinafter, the present invention will be described in more detail with reference to examples and comparative examples, but the present invention is not limited to these examples. In the following examples and comparative examples, "parts" and "%" are on a mass basis unless otherwise specified.

The following components were prepared as the component (A) (EVOH (A)), the component (B) (PVA-based resin (B)), the inorganic filler (C), and an aqueous polyolefin dispersion.

### Component (A)

- EVOH (A-1) (degree of saponification 99 mol%, ethylene content 32 mol%, MFR 12 g/10 min (210°C, load 2160 g))

### Component (B)

- PVA-based resin (B-1) (unmodified PVA resin, average degree of polymerization 2200, degree of saponification 88 mol%, 4 mass% viscosity at 20°C from 40 to 46 mPa·s)
- PVA-based resin (B-2) (unmodified PVA resin, average degree of polymerization 2500, degree of saponification 76 mol%, 4 mass% viscosity at 20°C from 44 to 52 mPa·s)
- PVA-based resin (B-3) (unmodified PVA resin, average degree of polymerization 1700, degree of saponification 88 mol%, 4 mass% viscosity at 20°C from 20.0 to 24.5 mPa·s)
- PVA-based resin (B-4) (unmodified PVA resin, average degree of polymerization 1700, degree of saponification 98 mol%, 4 mass% viscosity at 20°C from 25 to 30 mPa·s)

### Inorganic Filler (C)

- Gd₂O₃ powder (available from Nippon Yttrium Co., Ltd., product name Gadolinium Oxide 99.9%, average particle size 2.32 µm)

### Aqueous Polyolefin Dispersion

- Low-density polyethylene dispersion (available from Mitsui Chemicals, Inc., product name CHEMIPEARL M200, solid concentration 20%)

### Example 1

From a hopper of a twin-screw extruder [product No. KZW15TW-60MG, available from Technovel Corporation, L/D = 60], 100 parts of the EVOH (A-1) was continuously fed and meltkneaded under the following extrusion temperature conditions. The melt was continuously extruded (screw rotation speed 300 rpm) under a heating time condition of 180 seconds while 43 parts of the PVA-based resin (B-1) and 507 parts of water as a dispersion medium were fed from a feed port provided in the extruder, thereby obtaining an emulsion (I-1). The emulsion (I-1) represents the emulsion (I) prepared in Example 1. In addition, "EVOH/PVA" in Table 2 represents the content ratio of the EVOH to the PVA-based resin on a mass basis. In Example 1, the content ratio of the EVOH (A-1) to the PVA-based resin (B-1) on a mass basis is 70/30. That is, in Example 1, the content ratio of the PVA-based resin (B-1) per 100 mass% of the total of the EVOH (A-1) and the PVA-based resin (B-1) is 30 mass%.

The dispersed particle size (median diameter) in the emulsion (I-1) was measured with a laser diffraction particle size analyzer (product No. LA-950V2, available from Horiba, Ltd.) and was found to be 2.57 µm.
Extrusion temperature (°C): C1/C2/C3/C4/C5/C6/C7/C8 = 170/220/220/195/95/95/95/95

The emulsion (I-1) obtained above and the Gd₂O₃ powder were uniformly mixed by stirring in a batch mixer at a ratio of the emulsion (I-1) to the Gd₂O₃ powder (mass ratio) of 70/30 (650 parts/279 parts), thereby obtaining a coating composition. The coating composition was applied to a substrate (PET film) and dried by standing at 90°C for 10 minutes, and coating films with thicknesses of 30 µm and 1 mm were obtained and evaluated as follows. The results are shown in Table 2. In each evaluation result, "-" indicates that the measurement was not performed.

### Examples 2 to 7 and Comparative Examples 1, 2, and 4

An emulsion (I) in each example of Examples 2 to 7 and Comparative Examples 1, 2, and 4 was prepared in the same manner as in Example 1 except that the amount and type of each component were changed as shown in Tables 1 and 2. Subsequently, each coating composition and coating films in each example of Examples 2 to 7 and Comparative Examples 1, 2, and 4 were obtained in the same manner as in Example 1 except that the inorganic filler (Gd₂O₃ powder) in a proportion shown in Table 2 was mixed with the emulsion (I) in each example, and the same evaluations were performed. The results are shown in Table 2. However, the coating compositions of Comparative Examples 1 and 4 failed to form coating films.

### Comparative Example 3

A coating composition was obtained in the same manner as in Example 1, except that the emulsion (I-1) used in Example 1 was changed to 470 parts of the aqueous polyolefin dispersion (available from Mitsui Chemicals, Inc., product name CHEMIPEARL M200), and this was mixed with 113 parts of the Gd₂O₃ powder. An attempt was made to obtain coating films with thicknesses of 30 µm and 1 mm by applying the coating composition to a substrate (PET film) and drying by standing at 90°C for 10 minutes but failed to form the coating films.

### Coating Film Formability

The resulting coating films with thicknesses of 30 µm and 1 mm were bent by hand 10 times, and the surface states were visually observed and evaluated according to the following criteria. A coating film with an evaluation result of being excellent, very good, or good was determined to be acceptable.
Excellent: No cracks were observed
Very good: Cracks were observed in a part of the bent portion
Good: Cracks were observed not only in the bent portion but also in other portions
Poor: The coating film was too inflexible to be bent

### Water Resistance of Coating Film

One drop of water was placed on the resulting coating film with a thickness of 30 µm using a dropper, and the portion of the water droplet was rubbed with a finger after 5 seconds. The surface state of the coating film at the time of rubbing was visually observed and evaluated according to the following criteria. A coating film with an evaluation result of being excellent, very good, or good was determined to be acceptable.
Excellent: The coating film at the place where the water droplet was placed was not dissolved, and the substrate was not exposed
Very good: The substrate was exposed in less than half of the coating film area in the place where the water droplet was dropped
Good: The substrate was exposed in a half or more of the coating film area in the place where the water droplet was dropped
Poor: The coating film at the place where the water droplet was placed was dissolved, and the substrate was completely exposed

### Gas Barrier Properties

The coating film with a thickness of 30 µm obtained above was measured for the oxygen transmission rate (OTR, unit: cc/m²/day/atm) in accordance with JIS K7126-2 (2006) using an oxygen transmission rate tester (OX-TRAN2/21, available from MOCON Inc.) under conditions of 23°C and a relative humidity of 50%.

### Neutron Shielding Performance

For each coating composition, a plate-shaped molded article for evaluation was prepared as described above, and the neutron transmittance was evaluated. Gold foils were set on the front and back (both main surfaces) of the molded sample for evaluation. The sample was then irradiated with neutrons from the front side in a direction parallel to the plate thickness direction. Either of the main surfaces of the sample can be freely selected as the front surface. The accelerator neutron source was generated under the following conditions. The gold foils set on the front and back of the sample were arranged so as not to overlap each other when viewed in parallel with the plate thickness direction of the sample (i.e., the irradiation direction of neutrons).

When irradiated with neutrons, the gold foil is radioactivated. The neutron shielding rate was evaluated from the ratio of the radioactivity intensity of the gold foil on the back side irradiated with neutrons that had passed through the sample to the radioactivity intensity of the gold foil on the front side of the sample directly irradiated with neutrons. That is, a sample with a higher neutron shielding rate can be evaluated as having excellent neutron shielding performance. The results are shown in Table 2.

### Accelerator Neutron Source

Accelerator: Cyclotron HM-18HC available from Sumitomo Heavy Industries, Ltd.
Accelerated particles: protons 18 MeV
Target: Be
Neutron-generating nuclear reaction: ⁷Be (p, n) ⁷B reaction
Irradiation current: up to 120 µA
Irradiation time: 3 hours

### Substrate Degradation Properties

Each coating composition of Examples 1, 3, and 7 was applied to PP substrates (made of polypropylene, 15 × 15 cm × 1 mm in thickness) and dried by standing at 90°C for 10 minutes, thereby obtaining coating films with a thickness shown in Table 2. The resulting coated substrates were then irradiated with gamma rays under the following conditions. In addition, the stress at break of the PP substrate before and after the gamma-ray irradiation was measured by an Autograph. The results are shown in Table 2. As shown in Table 2, the stress at break of the PP substrate before the gamma-ray irradiation was 29.0 MPa.

The measurement was performed at the ⁶⁰Co γ-ray Irradiation Facility, the Engineering Research & Development Center, Atox Co., Ltd.
- Radiation source: ⁶⁰Co-sealed source
- Dose rate 1 kGy/h, Cumulative dose 100 kGy

### Measurement of Stress at Break

Autograph AG-IS (available from Shimadzu Corporation)
- Measurement sample size: Irradiated samples punched with Dumbbell No. 3
- Tensile speed: 200 mm/min
- Distance between chucks: 4 mm

### Comparative Example 5

The substrate degradation properties were evaluated for an uncoated PP substrate (made of polypropylene, 15 × 15 cm × 1 mm in thickness) without using the coating composition as Comparative Example 5. The results are shown in Table 2.

### [Table 1]

**Table 1**

| | | Ethylene content (%) | Degree of saponification | Degree of polymerization |
|---|---|---|---|---|
| | B-1 | 0 | 88 | 2200 |
| PVOH | B-2 | 0 | 76 | 2500 |
| | B-3 | 0 | 88 | 1700 |
| | B-4 | 0 | 98 | 1700 |

### [Table 2]

**Table 2**

| | Emulsion (I) *An emulsion containing PE, a surfactant, and water in Comparative Example 3 | | | | | | | Inorganic filler |
|---|---|---|---|---|---|---|---|---|
| | EVOH | | PVA | | EVOH/PVA | Water | Median diameter | Gd₂O₃ powder |
| | Type | Content (parts) | Type | Content (parts) | | Content (parts) | µm | Content (parts) |
| Example 1 | A-1 | 100 | B-1 | 43 | 70/30 | 507 | 2.57 | 279 |
| Example 2 | A-1 | 100 | B-1 | 43 | 70/30 | 507 | 2.57 | 163 |
| Example 3 | A-1 | 100 | B-1 | 67 | 60/40 | 592 | 2.24 | 1139 |
| Example 4 | A-1 | 100 | B-1 | 67 | 60/40 | 592 | 2.24 | 325 |
| Example 5 | A-1 | 100 | B-2 | 43 | 70/30 | 507 | 8.78 | 279 |
| Example 6 | A-1 | 100 | B-3 | 43 | 70/30 | 507 | 5.25 | 279 |
| Example 7 | A-1 | 100 | B-1 | 43 | 70/30 | 507 | 2.57 | 0 |
| Comparative Example 1 | A-1 | 100 | B-1 | 2.8 | 97/3 | 365 | 17.65 | 201 |
| Comparative Example 2 | A-1 | 5.2 | B-1 | 100 | 5/95 | 691 | 1.13 | 380 |
| Comparative Example 3 | PE | 100 | Surfactant | 5 | | 365 | 6.32 | 113 |
| Comparative Example 4 | A-1 | 100 | B-4 | 43 | 70/30 | 507 | - | 279 |
| Comparative Example 5 | - | 0 | - | 0 | 0 | 0 | - | - |

| | Evaluation | | | | | | | |
|---|---|---|---|---|---|---|---|---|
| | Coating film formability | | | Water resistance of coating film | Neutron shielding properties of coating film | Substrate degradation resistance (thickness of coating film) | Gas barrier properties | |
| | Emulsification | 30 µm | 1 mm | 30 µm | % (1-mm thick film) | Stress (Mpa) at break of substrate | cc/m²·day·atm (30 µm) | |
| | | | | | | Before irradiation: 29.0 MPa | | |
| Example 1 | Very good | Excellent | Very good | Excellent | 82 | 31.0 (50 µm) | 30.98 | |
| Example 2 | Very good | Excellent | Excellent | Excellent | 79 | - | 0.26 | |
| Example 3 | Very good | Excellent | Good | Very good | 84 | 29.0 (41 µm) | 849.57 | |
| Example 4 | Very good | Excellent | Very good | Very good | 82 | - | 94.18 | |
| Example 5 | Very good | Excellent | Very good | Good | 82 | - | Unmeasurable (Over) | |
| Example 6 | Good | Good | Good | Very good | 82 | - | 48.12 | |
| Example 7 | Very good | Excellent | Very good | Excellent | - (Failed to prepare 1-mm thick film) | 32.8 (21 µm) | 0.21 | |
| Comparative Example 1 | Poor | Poor | Poor | - (Failed to form coating film) | - | - | - (Failed to form coating film) | |
| Comparative Example 2 | Very good | Very good | Very good | Poor | 81 | - | Unmeasurable (Over) | |
| Comparative Example 3 | Very good | Poor | Poor | - (Failed to form coating film) | - | - | - (Failed to form coating film) | |
| Comparative Example 4 | Poor | Poor | Poor | - (Failed to form coating film) | - | - | - (Failed to form coating film) | |
| Comparative Example 5 | - | - | - | No coating film | - | 18.4 | No coating film | |

The coating compositions of Examples 1 to 7 were determined to be acceptable in the evaluation of the coating film formability and also in the evaluation of water resistance when the coating film was formed. In addition, the coating compositions of Examples 1 to 4, 6, and 7 also had gas barrier properties when the coating film was formed.

On the other hand, the coating composition of Comparative Example 1 had a content ratio of the PVA-based resin to the total of the EVOH and the PVA-based resin as low as 3 mass% and exhibited poor dispersion stability of the inorganic filler, thus failing to form a coating film.

The coating composition of Comparative Example 2 had a content ratio of the PVA-based resin to the total of the EVOH and the PVA-based resin as high as 95 mass% and exhibited good coating film formability, but had poor water resistance and gas barrier properties when the coating film was formed.

The coating composition of Comparative Example 3 using the aqueous polyolefin dispersion exhibited poor dispersion stability of the inorganic filler, thus failing to form a coating film.

The coating composition of Comparative Example 4 was obtained using the PVA-based resin with a degree of saponification as high as 98 mol%, and thus failed to form an emulsion and failed to form a coating film.

Furthermore, the coating compositions of Examples 1 to 6 exhibited high neutron shielding performance.

Moreover, the coating compositions of Examples 1, 3, and 7 effectively suppressed or prevented the deterioration of the substrate due to the gamma-ray irradiation.

Although the present invention has been described in detail and with reference to specific embodiments, it will be apparent to those skilled in the art that various changes and modifications can be made without departing from the spirit and scope of the present invention. The present application is based on the Japanese Patent Application (JP 2023-183314) filed on October 25, 2023, the content of which is incorporated herein by reference.

## Claims

1. A coating composition comprising:
an emulsion (I) containing:
a saponified ethylene-vinyl ester-based copolymer (A) with an ethylene-derived structural unit content of 10 mol% or more; and
a poly(vinyl alcohol)-based resin (B) with an ethylene-derived structural unit content of less than 10 mol%, wherein
a content ratio of the poly(vinyl alcohol)-based resin (B) per 100 mass% of a total of the saponified ethylene-vinyl ester-based copolymer (A) and the poly(vinyl alcohol)-based resin (B) is from 5 to 90 mass%, and
a degree of saponification of the poly(vinyl alcohol)-based resin (B) is from 70 to 97 mol%.

2. The coating composition according to claim 1, wherein an average particle size of emulsion particles in the emulsion (I) is from 0.1 to 20 µm.

3. The coating composition according to claim 1, wherein a content of the ethylene-derived structural unit in the saponified ethylene-vinyl ester-based copolymer (A) is from 10 to 77 mol%.

4. The coating composition according to claim 1, wherein the degree of saponification of the poly(vinyl alcohol)-based resin (B) is from 85 to 95 mol%.

5. The coating composition according to claim 1, wherein an average degree of polymerization of the poly(vinyl alcohol)-based resin (B) is from 1800 to 2500.

6. The coating composition according to claim 1, further comprising an inorganic filler (C).

7. The coating composition according to claim 6, wherein the inorganic filler (C) is contained in an amount from 100 to 2000 parts by mass per 100 parts by mass of the saponified ethylene-vinyl ester-based copolymer (A).

8. The coating composition according to claim 6, wherein the inorganic filler (C) contains at least one selected from the group consisting of a calcium-based compound, a titanium-based compound, a vanadium-based compound, a chromium-based compound, a manganese-based compound, an iron-based compound, a cobalt-based compound, a nickel-based compound, a copper-based compound, a zinc-based compound, a zirconium-based compound, a niobium-based compound, a molybdenum-based compound, a technetium-based compound, a ruthenium-based compound, a rhodium-based compound, a palladium-based compound, a silver-based compound, a cadmium-based compound, an indium-based compound, a tin-based compound, an antimony-based compound, a barium-based compound, a lanthanum-based compound, a cerium-based compound, a neodymium-based compound, a samarium-based compound, a gadolinium-based compound, a lithium-based compound, a boron-based compound, a hafnium-based compound, a tantalum-based compound, a tungsten-based compound, a rhenium-based compound, an osmium-based compound, a platinum-based compound, a gold-based compound, a thallium-based compound, a lead-based compound, a bismuth-based compound, a polonium-based compound, sand, soil, clay, ore, a mineral, mortar, cement, concrete, asphalt, and ceramic.

9. A radiation shielding coating composition comprising the coating composition described in any one of claims 1 to 8.

10. The radiation shielding coating composition according to claim 9, wherein the radiation includes one or more selected from the group consisting of neutrons, protons, and heavy particles.
